# FASCICULE DE BREVET EUROPEEN

(11) **EP 1 907 402 B1**
(45) Date de publication et mention de la délivrance du brevet: **14.10.2009**
(21) Numéro de dépôt: 06764234.8
(22) Date de dépôt: 20.07.2006
(51) Int. Cl.: C07F 9/50

(54) **BISPHOSPHINES**
BISPHOSPHINE
BISPHOSPHINES

(30) Priorité: 22.07.2005 GB 0515082
(43) Date de publication de la demande: 09.04.2008
(73) Titulaire: Rhodia UK Limited, Watford, Hertfordshire WD24 4QP (GB)
(72) Inventeur: DOCHERTY, Gordon, Birmingham West Midlands B14 7QS (GB); Monsieur GOOD, Graham, West Midlands ,B69 3NG OLDBURY (GB); JACKSON, Sheena, Birmingham West Midlands B160RS (GB)
(74) Mandataire: Seugnet, Jean Louis
(86) Numéro de dépôt international: PCT/EP2006/064441
(87) Numéro de publication internationale: WO 2007/010016

(56) Documents cités:
- EP-A1- 1 452 537
- MIURA T ET AL: "Synthesis and reactions of optically active secondary dialkylphosphine-boranes" JOURNAL OF ORGANIC CHEMISTRY, AMERICAN CHEMICAL SOCIETY. EASTON, US, vol. 65, no. 6, 2 mars 2000 (2000-03-02), pages 1877-1880, XP002366766 ISSN: 0022-3263

## Description

La présente invention concerne la production de bisphosphines.

Les bisphosphines peuvent être produites à partir de la réaction d'une phosphine avec un dihalogénure. Cependant, cette réaction engendre un produit de bisphosphonium linéaire ainsi qu'un sous-produit à cycle fermé de monophosphonium cyclique. Ceci signifie que le rendement en produit de bisphosphonium linéaire, et en bisphosphine pouvant en être obtenue, peut être relativement faible.

EP 1 452 537 décrit la production de bisphosphine à partir de la réaction d'un composé de phosphine-borane avec un dihalogénure.

Il existe donc un besoin d'un moyen pour augmenter la formation du produit de bisphosphonium désiré par rapport au sous-produit de monophosphonium, et d'améliorer ainsi le rendement en bisphosphine.

La présente invention fournit, dans un premier aspect, un procédé de production d'une bisphosphine, comprenant la réaction d'une phosphine avec un dihalogénure en présence d'un acide.

De manière surprenante, l'incorporation d'un acide dans la réaction d'une phosphine avec un dihalogénure augmente la formation du produit de bisphosphonium désiré et permet donc d'obtenir un rendement amélioré de la bisphosphine.

L'acide, la phosphine et le dihalogénure peuvent être associés selon un ordre quelconque. Par exemple, l'acide peut être ajouté à un réacteur contenant la phosphine et le dihalogénure, ou l'acide peut être ajouté à un réacteur simultanément avec la phosphine et le dihalogénure, ou l'acide, la phosphine et le dihalogénure peuvent être ajoutés à un réacteur séquentiellement selon un ordre quelconque.

L'acide peut être utilisé en des quantités convenables quelconques, par exemple selon un rapport molaire avec le dihalogénure (acide:dihalogénure) allant de 0,005:1 à 5:1, tel que de 0,01:1 à 3:1. Dans un mode de réalisation, l'acide est utilisé en des quantités de type catalytique. Par exemple, l'acide peut être utilisé selon un rapport molaire avec le dihalogénure (acide:dihalogénure) allant de 0,01:1 à 0,1:1, tel que de 0,03:1 à 0,08:1. Dans un autre mode de réalisation, l'acide est utilisé en des quantités de type stoechiométrique. Par exemple, l'acide peut être utilisé selon un rapport molaire avec le dihalogénure (acide:dihalogénure) allant de 0,5:1 à 2:1, tel que de 0,75:1 à 1,25:1.

L'acide peut être un acide quelconque convenable, mais il s'agit de préférence d'un acide fort. L'acide peut avoir de manière convenable un pKa dans l'eau à 25°C de 4,0 ou moins, par exemple un pKa de 3,0 ou moins, tel qu'un pKa de 2,0 ou moins ; préférablement un pKa de 1,5 ou moins, par exemple un pKa de 1,0 ou moins, tel qu'un pKa de 0,5 ou moins ; plus préférablement un pKa de 0 ou moins, par exemple un pKa de -1,0 ou moins, tel qu'un pKa de -1,5 ou moins ; tout préférablement un pKa de -2,0 ou moins, par exemple un pKa de -2,5 ou moins, tel qu'un pKa de -3,0 ou moins.

L'acide est de préférence un acide organique mais dans un mode de réalisation alternatif, il peut s'agir d'un acide minéral.

Dans un mode de réalisation, l'acide est un acide soufré. Par exemple, l'acide peut être l'acide sulfurique ou un acide sulfonique. Des exemples de tels acides sont : les acides fluorosulfoniques (y compris l'acide fluorométhanesulfonique, l'acide difluorométhanesulfonique, l'acide trifluorométhanesulfonique (acide triflique), l'acide trifluoroéthanesulfonique, l'acide perfluorooctanesulfonique, et l'acide perfluoro-4-méthyl-3,6-dioxaoctanesulfonique) ; l'acide méthanesulfonique ; l'acide benzènesulfonique ; l'acide sulfurique ; l'oléum ; et l'acide p-toluènesulfonique. Les acides préférés sont les acides organiques soufrés, en particulier l'acide triflique et l'acide méthanesulfonique.

D'autres exemples d'acides forts pouvant être utilisés sont l'acide nitrique, l'acide chlorhydrique et l'acide perchlorique.

Le dihalogénure est sélectionné de façon à correspondre à la bisphosphine que l'on désire produire par le procédé. Par exemple, si la bisphosphine requise est un composé aromatique ayant deux groupements substituants phosphine, alors le dihalogénure sera le composé analogue aromatique ayant deux groupements substituants d'halogène.

Dans un mode de réalisation, le dihalogénure est un bis(halogénométhyl)benzène. Dans ce cas, la bisphosphine peut être, de manière convenable, un bis(alkylphosphinométhyl)benzène, par exemple, un bis(di-*tertio*-butylphosphinométhyl)benzène. Le dihalogénure peut être un 1,2 (ortho) ou 1,3 (méta) ou 1,4 (para) bis(halogénométhyl)benzène (correspondant à la bisphosphine désirée ayant une substitution en 1,2 (ortho) ou 1,3 (méta) ou 1,4 (para) des deux groupements à base de phosphine sur le benzène, respectivement). Dans un mode de réalisation préféré, la substitution est en 1,2.

Les groupements halogène dans le dihalogénure peuvent être des groupements halogène quelconques, mais ils sont sélectionnés de préférence parmi des groupements chlore, brome et iode. Dans un mode de réalisation préféré, le dihalogénure est un dibromure.

Par conséquent, dans un mode de réalisation, le dihalogénure est le 1,2-bis(bromométhyl)benzène.

La phosphine est sélectionnée de façon à correspondre aux substituants phosphine sur la bisphosphine que l'on désire produire par ce procédé. Par exemple, si la bisphosphine requise possède des groupements substituants phosphine secondaire (R₂P-, où chaque R, qui peut être identique ou différent, est un groupement fonctionnel) alors la phosphine sera la phosphine secondaire analogue R₂PH. Chaque groupement R peut être sélectionné de manière convenable parmi des groupements alcoxy, nitro, alcynyle et acide sulfonique et des groupements alkyle, aryle, amino et vinyle substitués ou non substitués. On préfère que chaque groupement R contienne jusqu'à 20 atomes de carbone, par exemple jusqu'à 12 atomes de carbone, tel que 0, 1, 2, 3 ou 4 atomes de carbone.

Dans un mode de réalisation, la phosphine utilisée est une alkylphosphine. Dans ce cas, la bisphosphine désirée peut être de manière convenable un bis(alkylphosphinométhyl)benzène. Préférablement, la phosphine est une dialkylphosphine (R₂PH où chaque R est alkyle) ; dans ce cas, la bisphosphine désirée peut être un bis(dialkylphosphinométhyl)benzène. L'alkyle peut être de manière convenable un alkyle en C₁₋₈, tel que méthyle, éthyle, propyle, *n*-butyle ou *tertio*-butyle. Par exemple, la phosphine peut être une di-tertio-butylphosphine ; dans ce cas, la bisphosphine désirée peut être un bis(di-*tertio*-butylphosphino-méthyl)benzène.

La phosphine peut être présente en des quantités de type stoechiométrique convenables quelconques par rapport au dihalogénure étant donné qu'on envisage de produire une bisphosphine. Par conséquent, la phosphine peut être utilisée selon un rapport molaire avec le dihalogénure (phosphine:dihalogénure) allant de 2:1 à 5:1, tel que de 2,5:1 à 4:1, par exemple de 3:1 à 3,5:1.

Dans un mode de réalisation, la bisphosphine étant produite est une 1,4-bisphosphine (les atomes de phosphore sont distants de 4 carbones).

La réaction peut être réalisée dans des conditions convenables quelconques et pendant une durée convenable quelconque. On peut utiliser les conditions et les temps de réaction tels que connus dans la technique pour la production de bisphosphine classique par réaction d'une phosphine avec un dihalogénure.

Par exemple, la réaction peut être réalisée dans un solvant convenable quelconque, par exemple un solvant organique tel que l'acétone. La réaction peut être réalisée à une température convenable quelconque, par exemple à la température du reflux ou proche de celle-ci.

Le procédé comprend de manière convenable une étape de conversion du produit de bisphosphonium ayant été obtenu à partir de la réaction de phosphine et de dihalogénure en présence d'un acide en bisphosphine correspondante.

Dans un mode de réalisation, le procédé comprend l'étape de réaction : (I) du produit de bisphosphonium obtenu à partir de la réaction de la phosphine avec le dihalogénure en présence d'un acide ; et (II) d'une base.

Par conséquent, l'invention fournit un procédé de production de bisphosphine, lequel procédé comprend :
a) la réaction d'une phosphine avec un dihalogénure en présence d'un acide pour engendrer un produit de bisphosphonium ; et
b) la réaction du produit de bisphosphonium obtenu à partir de l'étape (a) avec une base.

Eventuellement, le produit de bisphosphonium obtenu à partir de l'étape (a) peut être isolé avant de réaliser l'étape (b).

Les caractéristiques préférées pour l'étape (a) sont telles que définies ci-dessus.

La base utilisée dans l'étape (b) peut être une base convenable quelconque. Préférablement, la base est une base faible. De manière convenable, la base peut avoir un pKb dans l'eau à 25°C de 0 ou plus ; par exemple un pKb de 1,0 ou plus ; préférablement un pKb de 2,0 ou plus, par exemple un pKb de 3,0 ou plus, tel qu'un pKb de 4,0 ou plus ; plus préférablement un pKb de 5,0 ou plus, par exemple un pKb de 6,0 ou plus, tel qu'un pKb de 7,0 ou plus. Des exemples de bases convenables comportent l'acétate de sodium trihydraté, l'acétate de potassium trihydraté, le carbonate de sodium ou le carbonate de potassium. La base est utilisée de manière convenable sous la forme d'une solution, par exemple une solution aqueuse.

La présente invention fournit également, dans un deuxième aspect, l'utilisation d'un acide pour augmenter le rendement de produits de bisphosphonium ou de bisphosphines dans une réaction.

L'acide peut être tel que décrit ci-dessus dans le cadre du premier aspect.

Préférablement, l'utilisation se trouve dans un procédé de production de bisphosphine comprenant la réaction d'une phosphine avec un dihalogénure.

Dans les modes de réalisation préférés, la réaction est telle que définie ci-dessus dans le cadre du premier aspect.

Dans un troisième aspect de l'invention, on fournit un procédé de production d'un complexe métallique, comprenant :
(i) la production d'une bisphosphine par la réalisation d'un procédé conformément au premier aspect de l'invention ; et
(ii) la réaction une ou plusieurs molécules de la bisphosphine obtenue à partir de l'étape (i) avec une source de sel métallique.

Eventuellement, la bisphosphine obtenue à partir de l'étape (i) peut être isolée avant de réaliser l'étape (ii).

Les caractéristiques préférées pour l'étape (i) sont telles que définies ci-dessus dans le cadre du premier aspect.

Le sel métallique peut être un sel métallique quelconque, mais il s'agit préférablement d'un sel fournissant un ion ou atome de métal de transition, plus préférablement un ion ou atome de métal de transition du Groupe 8, 9 ou 10, tout préférablement un ion ou métal de ruthénium, d'iridium, de rhodium ou de palladium, par exemple le ruthénium (II).

La présente invention sera maintenant illustrée davantage au moyen des exemples suivants :

### Exemple Comparatif 1

Un mélange de di-*tertio*-butylphosphine (9 g, 61,6 mmol) et de di-bromo-o-xylène (5 g, 18,9 mmol) a été chauffé au reflux en présence d'acétone (20 ml). La solution résultante a été laissée en maturation pendant 1 heure puis refroidie jusqu'à <10°C.

Un solide blanc cassé (6,7 g) a ensuite été isolé à partir du produit refroidi par filtration. Une portion de ce solide (3 g, 5,4 mmol) a ensuite été traitée par une base diluée (4,6 g, 33,8 mmol, acétate de sodium trihydraté dans 14 ml d'eau dégazée). Le solide précipité a ensuite été repris dans de l'éther (14 ml) et isolé par l'élimination du composant aqueux et l'évaporation ultérieure de l'éther. Un solide blanc cassé s'est cristallisé lors du refroidissement.

Le rendement en 1,2-bis-(di-tertio-butylphosphinométhyl)benzène était de 33%.

### Exemple 1

Un mélange de di-*tertio*-butylphosphine (9 g, 61,6 mmol), d'acide triflique (0,23 g, 1,5 mmol) et de di-bromo-*o*-xylène (5 g, 18,9 mmol) a été chauffé au reflux en présence d'acétone (20 ml). La solution résultante a été laissée en maturation pendant 1 heure puis refroidie jusqu'à <10°C.

Un solide blanc cassé (6,6 g) a ensuite été isolé à partir du produit refroidi par filtration. Une portion de ce solide (3 g, 5,4 mmol) a été traitée par une base diluée (4,6 g, 33,8 mmol, acétate de sodium trihydraté dans 14ml d'eau dégazée). Le solide précipité a ensuite été repris dans de l'éther (14 ml) et isolé par l'élimination du composant aqueux et l'évaporation ultérieure de l'éther. Un solide blanc cassé s'est cristallisé lors du refroidissement.

Le rendement en 1,2-bis-(di-tertio-butylphosphinométhyl)benzène était de 41%.

Par conséquent, on peut constater que d'après l'Exemple conformément à l'invention, on a obtenu un rendement significativement amélioré de la bisphosphine par rapport à l'Exemple Comparatif.

## Revendications

1. Procédé de production d'une bisphosphine, comprenant la réaction d'une phosphine avec un dihalogénure en présence d'un acide.

2. Procédé selon la revendication 1, dans lequel l'acide est utilisé selon un rapport molaire avec le dihalogénure (acide:dihalogénure) allant de 0,01:1 à 0,1:1.

3. Procédé selon la revendication 2, dans lequel l'acide est utilisé selon un rapport molaire avec le dihalogénure (acide:dihalogénure) allant de 0,03:1 à 0,08:1.

4. Procédé selon l'une quelconque des revendications 1 à 3, dans lequel l'acide a un pKa dans l'eau à 25°C de 4,0 ou moins.

5. Procédé selon la revendication 4, dans lequel l'acide a un pKa de 2,0 ou moins.

6. Procédé selon la revendication 5, dans lequel l'acide a un pKa de 0 ou moins.

7. Procédé selon la revendication 6, dans lequel l'acide a un pKa de -1,0 ou moins.

8. Procédé selon la revendication 7, dans lequel l'acide a un pKa de -2,0 ou moins.

9. Procédé selon l'une quelconque des revendications précédentes, dans lequel l'acide est un acide organique.

10. Procédé selon l'une quelconque des revendications précédentes, dans lequel l'acide est un acide soufré.

11. Procédé selon la revendication 10, dans lequel l'acide est l'acide sulfurique ou un acide sulfonique.

12. Procédé selon la revendication 11, dans lequel l'acide est l'acide triflique ou l'acide méthanesulfonique.

13. Procédé selon l'une quelconque des revendications précédentes, dans lequel le dihalogénure est un bis(halogénométhyl)benzène.

14. Procédé selon la revendication 13, dans lequel le dihalogénure est un 1,2-bis(halogénométhyl)benzène.

15. Procédé selon l'une quelconque des revendications précédentes, dans lequel le dihalogénure est un dibromure.

16. Procédé selon l'une quelconque des revendications précédentes, dans lequel la phosphine est une phosphine secondaire R₂PH, dans laquelle chaque R, qui peut être identique ou différent, est un groupement fonctionnel.

17. Procédé selon la revendication 16, dans lequel la phosphine est une alkylphosphine.

18. Procédé selon la revendication 17, dans lequel la phosphine est une dialkylphosphine (R₂PH où chaque R est alkyle).

19. Procédé selon la revendication 17 ou la revendication 18, dans lequel l'alkyle est un alkyle en C₁₋₈.

20. Procédé selon la revendication 19, dans lequel la phosphine est la di-tertio-butylphosphine.

21. Procédé selon l'une quelconque des revendications précédentes, dans lequel le procédé comprend une étape de conversion du produit de bisphosphonium, ayant été obtenu à partir de la réaction de phosphine et de dihalogénure en présence d'un acide, en bisphosphine correspondante.

22. Procédé selon la revendication 21, dans lequel le procédé comprend la réaction : (I) du produit de bisphosphonium obtenu à partir de la réaction de la phosphine avec le dihalogénure en présence d'un acide ; et (II) d'une base.

23. Procédé selon la revendication 22, dans lequel le produit de bisphosphonium (I) est isolé avant d'être réagi avec la base (II).

24. Procédé selon la revendication 22 ou la revendication 23, dans lequel la base utilisée est une base faible.

25. Procédé selon la revendication 23, dans lequel la base a un pKb de 2,0 ou plus.

26. Utilisation d'un acide dans un procédé de production de bisphosphine, comprenant la réaction d'une phosphine avec un dihalogénure.

27. Utilisation selon la revendication 26, dans laquelle la réaction est conformément à l'une quelconque des revendications. 1 à 25.

28. Procédé de production d'un complexe métallique, comprenant :
(i) la production d'une bisphosphine par la réalisation d'un procédé conformément à l'une quelconque des revendications 1 à 25 ; et
(ii) la réaction d'une ou plusieurs molécules de la bisphosphine obtenue à partir de l'étape (i) avec une source de sel métallique.

29. Procédé selon la revendication 28, dans lequel la bisphosphine obtenue à partir de l'étape (i) est isolée avant de réaliser l'étape (ii).

30. Procédé selon la revendication 28, ou la revendication 29, dans lequel le sel métallique est un sel fournissant un ion ou atome de métal de transition.

## Claims

1. Process for the production of a bisphosphine, comprising the reaction of a phosphine with a dihalide in the presence of an acid.

2. Process according to Claim 1, in which the acid is used according to a molar ratio with the dihalide (acid:dihalide) ranging from 0.01:1 to 0.1:1.

3. Process according to Claim 2, in which the acid is used according to a molar ratio with the dihalide (acid:dihalide) ranging from 0.03:1 to 0.08:1.

4. Process according to any one of Claims 1 to 3, in which the acid has a pKa in water at 25°C of 4.0 or less.

5. Process according to Claim 4, in which the acid has a pKa of 2.0 or less.

6. Process according to Claim 5, in which the acid has a pKa of 0 or less.

7. Process according to Claim 6, in which the acid has a pKa of -1.0 or less.

8. Process according to Claim 7, in which the acid has a pKa of -2.0 or less.

9. Process according to any one of the preceding claims, in which the acid is an organic acid.

10. Process according to any one of the preceding claims, in which the acid is a sulfur-comprising acid.

11. Process according to Claim 10, in which the acid is sulfuric acid or a sulfonic acid.

12. Process according to Claim 11, in which the acid is triflic acid or methanesulfonic acid.

13. Process according to any one of the preceding claims, in which the dihalide is a bis(halomethyl)benzene.

14. Process according to Claim 13, in which the dihalide is a 1,2-bis(halomethyl)benzene.

15. Process according to any one of the preceding claims, in which the dihalide is a dibromide.

16. Process according to any one of the preceding claims, in which the phosphine is a secondary phosphine R₂PH in which each R, which can be identical or different, is a functional group.

17. Process according to Claim 16, in which the phosphine is an alkylphosphine.

18. Process according to Claim 17, in which the phosphine is a dialkylphosphine (R₂PH where each R is alkyl).

19. Process according to Claim 17 or Claim 18, in which the alkyl is a C₁₋₈ alkyl.

20. Process according to Claim 19, in which the phosphine is di(*tert*-butyl)phosphine.

21. Process according to any one of the preceding claims, in which the process comprises a stage of conversion to the corresponding bisphosphine of the bisphosphonium product which has been obtained from the reaction of phosphine and dihalide in the presence of an acid.

22. Process according to Claim 21, in which the process comprises the reaction: (I) of the bisphosphonium product obtained from the reaction of the phosphine with the dihalide in the presence of an acid; and (II) of a base.

23. Process according to Claim 22, in which the bisphosphonium product (I) is isolated before being reacted with the base (II).

24. Process according to Claim 22 or Claim 23, in which the base used is a weak base.

25. Process according to Claim 23, in which the base has a pKb of 2.0 or more.

26. Use of an acid in a process for the production of bisphosphine, comprising the reaction of a phosphine with a dihalide.

27. Use according to Claim 26, in which the reaction is in accordance with any one of Claims 1 to 25.

28. Process for the production of a metal complex, comprising:
(i) the production of a bisphosphine by carrying out a process in accordance with any one of Claims 1 to 25; and
(ii) the reaction of one or more molecules of the bisphosphine obtained from stage (i) with a source of metal salt.

29. Process according to Claim 28, in which the bisphosphine obtained from stage (i) is isolated before carrying out stage (ii).

30. Process according to Claim 28 or Claim 29, in which the metal salt is a salt providing a transition metal ion or atom.

## Patentansprüche

1. Verfahren zur Herstellung eines Bisphosphins, bei dem man ein Phosphin in Gegenwart einer Säure mit einem Dihalogenid umsetzt.

2. Verfahren nach Anspruch 1, bei dem man die Säure in einem Molverhältnis zum Dihalogenid (Säure:Dihalogenid) von 0,01:1 bis 0,1:1 verwendet.

3. Verfahren nach Anspruch 2, bei dem man die Säure in einem Molverhältnis zum Dihalogenid (Säure:Dihalogenid) von 0,03:1 bis 0,08:1 verwendet.

4. Verfahren nach einem der Ansprüche 1 bis 3, bei dem die Säure einen pKa-Wert in Wasser bei 25°C von 4,0 oder weniger aufweist.

5. Verfahren nach Anspruch 4, bei dem die Säure einen pKa-Wert von 2,0 oder weniger aufweist.

6. Verfahren nach Anspruch 5, bei dem die Säure einen pKa-Wert von 0 oder weniger aufweist.

7. Verfahren nach Anspruch 6, bei dem die Säure einen pKa-Wert von -1,0 oder weniger aufweist.

8. Verfahren nach Anspruch 7, bei dem die Säure einen pKa-Wert von -2,0 oder weniger aufweist.

9. Verfahren nach einem der vorhergehenden Ansprüche, bei dem es sich bei der Säure um eine organische Säure handelt.

10. Verfahren nach einem der vorhergehenden Ansprüche, bei dem es sich bei der Säure um eine schwefelhaltige Säure handelt.

11. Verfahren nach Anspruch 10, bei dem es sich bei der Säure um Schwefelsäure oder eine Sulfonsäure handelt.

12. Verfahren nach Anspruch 11, bei dem es sich bei der Säure um Trifluormethansulfonsäure oder Methansulfonsäure handelt.

13. Verfahren nach einem der vorhergehenden Ansprüche, bei dem es sich bei dem Dihalogenid um ein Bis(halogenmethyl)benzol handelt.

14. Verfahren nach Anspruch 13, bei dem es sich bei dem Dihalogenid um ein 1,2-Bis(halogenmethyl)-benzol handelt.

15. Verfahren nach einem der vorhergehenden Ansprüche, bei dem es sich bei dem Dihalogenid um ein Dibromid handelt.

16. Verfahren nach einem der vorhergehenden Ansprüche, bei dem es sich bei dem Phosphin um ein sekundäres Phosphin R₂PH, worin R jeweils gleich oder verschieden sein kann und für eine funktionelle Gruppe steht, handelt.

17. Verfahren nach Anspruch 16, bei dem es sich bei dem Phosphin um ein Alkylphosphin handelt.

18. Verfahren nach Anspruch 17, bei dem es sich bei dem Phosphin um ein Dialkylphosphin (R₂PH, wobei R jeweils für Alkyl steht) handelt.

19. Verfahren nach Anspruch 17 oder Anspruch 18, bei dem es sich bei dem Alkyl um ein C₁₋₈-Alkyl handelt.

20. Verfahren nach Anspruch 19, bei dem es sich bei dem Phosphin um Di-*tert.*-butylphosphin handelt.

21. Verfahren nach einem der vorhergehenden Ansprüche, bei dem man das aus der Umsetzung des Phosphins und des Dihalogenids in Gegenwart einer Säure erhaltene Bisphosphoniumprodukt in das entsprechende Bisphosphin umwandelt.

22. Verfahren nach Anspruch 21, bei dem man (I) das aus der Umsetzung des Phosphins und des Dihalogenids in Gegenwart einer Säure erhaltene Bisphosphoniumprodukt und (II) eine Base umsetzt.

23. Verfahren nach Anspruch 22, bei dem man das Bisphosphoniumprodukt (I) vor der Umsetzung mit der Base (II) isoliert.

24. Verfahren nach Anspruch 22 oder Anspruch 23, bei dem man als Base eine schwache Base verwendet.

25. Verfahren nach Anspruch 23, bei dem die Base einen pKb-Wert von 2,0 oder mehr aufweist.

26. Verwendung einer Säure bei einem Verfahren zur Herstellung von Bisphosphinen, bei dem man ein Phosphin mit einem Halogenid umsetzt.

27. Verwendung nach Anspruch 26, bei der die Umsetzung gemäß einem der Ansprüche 1 bis 25 erfolgt.

28. Verfahren zur Herstellung eines Metallkomplexes, bei dem man:
(i) durch Durchführung eines Verfahrens gemäß einem der Ansprüche 1 bis 25 ein Bisphosphin herstellt und
(ii) ein oder mehrere Moleküle des aus Schritt (i) erhaltenen Bisphosphins mit einer Metallsalzquelle umsetzt.

29. Verfahren nach Anspruch 28, bei dem man das aus Schritt (i) erhaltene Bisphosphin vor der Durchführung von Schritt (ii) isoliert.

30. Verfahren nach Anspruch 28 oder Anspruch 29, bei dem es sich bei dem Metallsalz um ein Salz handelt, das ein Übergangsmetallion oder -atom bereitstellt.
